# EUROPEAN PATENT APPLICATION

(11) **EP 4 311 305 A1**
(43) Date of publication of application: **24.01.2024**
(21) Application number: 22185934.1
(22) Date of filing: 20.07.2022
(51) Int. Cl.: H04W 36/00, H04W 76/19, H04W 36/14

(54) **COMMUNICATION NETWORK COMPONENT AND METHOD FOR RE-ESTABLISHMENT OF A COMMUNICATION CONNECTION**

(71) Applicant: NTT DOCOMO, INC., Chiyoda-Ku Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MINOKUCHI, Atsushi, Tokyo, 100-6150 (JP); TANIGUCHI, Masato, Tokyo, 100-6150 (JP); MIN, Tianyang, Tokyo, 100-6150 (JP); KIESS, Wolfgang, 56218 Mühlheim-Kärlich (DE)
(74) Representative: Viering, Jentschura & Partner mbB Patent- und Rechtsanwälte

(57) **Abstract**

According to various embodiments, a communication network component is described comprising a memory configured to store, for each of a plurality base stations, for each of a plurality of connections provided by the base station, mobile terminal context information for the connection, an input interface configured to receive, from a radio access network component, a request for mobile terminal context information for a connection previously provided by one of the base stations for a mobile terminal, a determiner configured to determine, among the mobile terminal context information stored, mobile terminal context information for the connection previously provided by the one of the base stations for the mobile terminal and an output interface configured to send the mobile terminal context information for the connection previously provided by the one of the base stations for the mobile terminal to the radio access network component.

## Description

The present disclosure relates to communication network components and methods for re-establishment of a communication connection.

In case of a failure of a radio access network, e.g. of a base station, providing a communication connection for a mobile terminal, it is typically desirable that the communication connection is quickly re-established. For quick re-establishment, the "new" base station, i.e. the base station which provides the re-established communication connection, needs mobile terminal context information such as a security context (e.g. encryption keys) and various other parameters whose reselection would delay the re-establishment (and would in fact rather mean that a new connection is established rather than the previous connection is re-established). However, it may not be easy or even possible for the new base station to acquire the mobile terminal context information.

Accordingly, approaches which allow acquiring mobile terminal context information for re-establishment of communication connections are desirable.

According to various embodiments, a communication network component is provided including a memory configured to store, for each of a plurality base stations, for each of a plurality of connections provided by the base station, mobile terminal context information for the connection, an input interface configured to receive, from a radio access network component, a request for mobile terminal context information for a connection previously provided by one of the base stations for a mobile terminal, a determiner configured to determine, among the mobile terminal context information stored, mobile terminal context information for the connection previously provided by the one of the base stations for the mobile terminal and an output interface configured to send the mobile terminal context information for the connection previously provided by the one of the base stations for the mobile terminal to the radio access network component.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates a scenario where a UE (user equipment) is connected via a first RAN (radio access network) and a first UPF (user plane function) to a server.
- Figure 3: shows a flow diagram for handling a RAN failure according to an embodiment.
- Figure 4: illustrates the usage of a CSF (centralized storage function) in a C-RAN (Cloud RAN) architecture.
- Figure 5: shows a communication network component according to an embodiment.
- Figure 6: shows a flow diagram illustrating a method for re-establishment of a communication connection.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

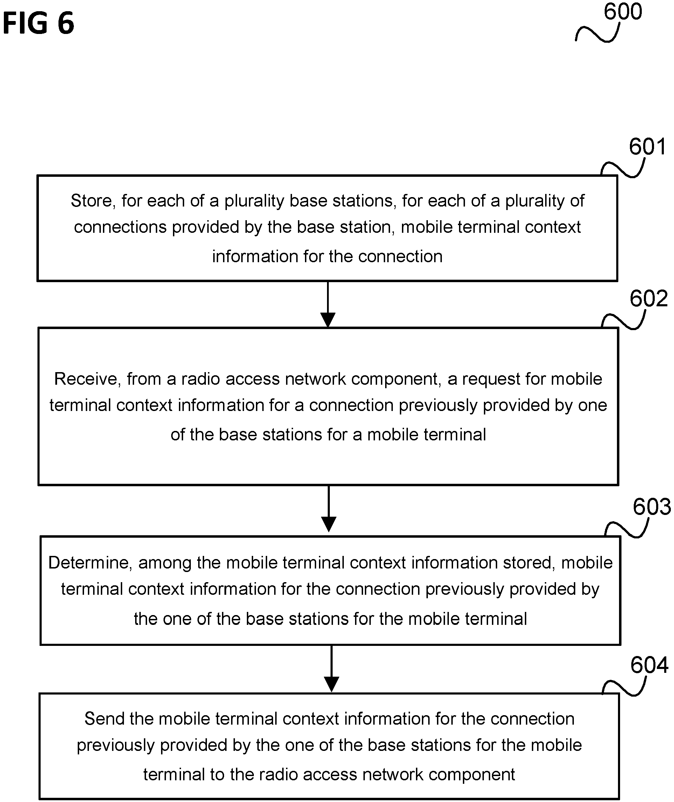

Various examples corresponding to aspects of this disclosure are described below:
Example 1 is a communication network component as described above.
Example 2 is the communication network component of Example 1, wherein the base stations are base stations of a first radio access network and the radio access network component is a component of a second radio access network, wherein the first radio access network consists of other base stations than the second radio access network.
Example 3 is the communication network component of Example 2, wherein the radio access network component is a base station of the second radio access network.
Example 4 is the communication network component of any one of Examples 1 to 3, wherein the communication network component is configured to receive, from the radio access network component, an identification associated with the one of the base stations and an identification of a base station which is to re-establish the communication connection and to determine the mobile terminal context information for the connection previously provided by the one of the base stations for the mobile terminal by identifying, among the plurality of base stations, a base station which fits the identification associated with one of the base stations and is in the vicinity of the base station which is to re-establish the communication connection and by determining the mobile terminal context information stored for the identified base station as the mobile terminal context information for the connection previously provided.
Example 5 is the communication network component of Examples 4, comprising identifying the base station which fits the identification of the one of the base stations and is in the vicinity of the base station which is to re-establish the communication connection by identifying a base station among the plurality of base stations which is closest to the base station which is to re-establish the communication connection among the base stations
Example 6 is the communication network component of Example 5, configured to store topology information of a deployment of the plurality of base stations and/or of a radio access network to which the base station which is to re-establish the communication connection belongs and to identify the base station which fits the identification of the one of the base stations and is in the vicinity of the base station which is to re-establish the communication connection using the topology information.
Example 7 is the communication network component of any one of Examples 1 to 6, wherein the connection is a radio resource control layer connection.
Example 8 is the communication network component of any one of Examples 1 to 7, wherein the mobile terminal context information includes one or more of a network slice identifier of a network slice providing a communication service via the communication connection, an identifier of an access and mobility management function handling the communication connection, an identifier of an access point for communication between the one of the base stations and the access and mobility management function handling the communication connection, an identifier for each of one or more data radio bearers associated with the communication connection, an identifier of a centralized unit and a distributed unit of the one of the base stations, a security context of the communication connection, an identifier of the mobile terminal and transport layer address parameters of the communication connection.
Example 9 is the communication network component of any one of Examples 1 to 8, wherein the memory is configured to store mobile terminal context information for connections provided by base stations provided by different public land mobile networks, wherein, for each public land mobile network, mobile terminal context information stored for a connection provided by the public land mobile network is stored in association with an identification of the public land mobile network.
Example 10 is the communication network component of any one of Examples 1 to 9, wherein the input interface is configured to receive the request from the radio access network component via another communication network component for storing mobile terminal context information.
Example 11 is a communication network comprising the communication network component of any one of Examples 1 to 10 and comprising the radio access network component, wherein the radio access network is configured to receive a request for re-establishment of the communication connection, determine whether it can acquire the mobile terminal context information from the one of the base stations; and, if it cannot acquire the mobile terminal context information from the one of the base stations, send the request for mobile terminal context information to the communication network component.
Example 12 is the communication network of Example 11, further comprising the plurality of base stations, wherein each base station is configured to store, for each of a plurality of connections provided by the base station, mobile terminal context information for the connection in the communication network component.
Example 13 is the communication network of Example 12, wherein each base station is configured to configure the mobile terminal context information for providing the connection, copy the mobile terminal context information to the communication network component and maintain the mobile terminal context information for providing the connection.
Example 14 is a method for re-establishment of a communication connection as illustrated in figure 6.

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

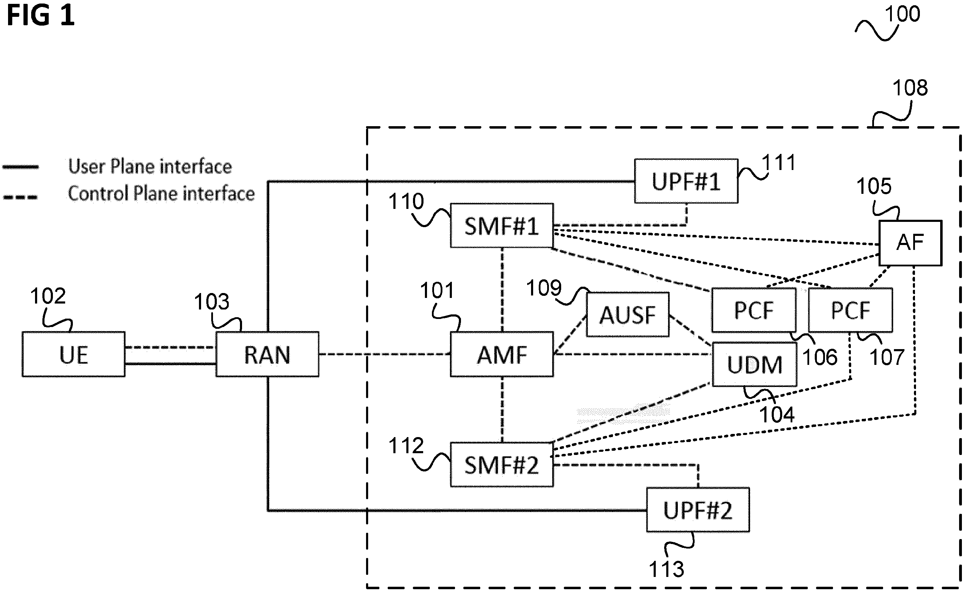

Figure 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (CN, here 5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application.

It may occur that the RAN 103 fails and thus, a communication service, e.g. a connection to an application server, is interrupted. In such a case, it is desirable that a replacement connection is quickly built up. This is in particular the case in case of traffic which requires (or should provide) high reliability and/or low latency, such as URLLC (Ultra reliable low latency communications) traffic. It should be noted that this may also be desirable in case that there is not a total failure of the RAN 103 but other abnormal conditions like a large loss of quality of service, e.g. latency or throughput. Therefore, a second RAN may be used to establish a replacement connection.

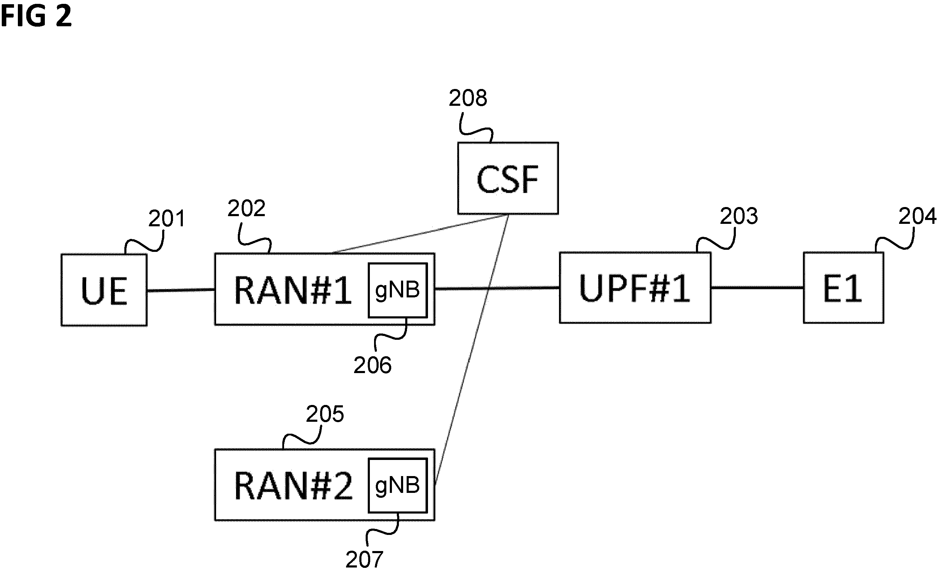

Figure 2 illustrates a scenario where a UE 201 is connected via a first RAN 202 and a first UPF 203 to a server 204 (here an edge server, denoted as E1).

It is assumed that in case of a failure (or other abnormal condition) of the first RAN 202, a second RAN 205 is available which may be used by the UE 201 to connect to the server 204.

When using the first RAN 202 to connect to the server 204, the UE 201 performs radio communication with a first base station (gNodeB or gNB in 5G) 206, denoted as "old gNB" (since it is used before the failure) of the first RAN 202. Specifically, the UE 201 uses a radio cell (denoted as "old" radio cell) provided by the old gNB 206. When using the second RAN 205 to connect to the server 204, the UE 201 performs radio communication with a second base station 207, denoted as "new gNB" or "target gNB" (since it is used after the failure) of the second RAN 205. Specifically, the UE 201 uses a radio cell (denoted as "new" radio cell) provided by the new gNB 207.

To achieve a quick reestablishment of the communication service, the UE 201 requests RRC (Radio Resource Control) re-establishment in case of a failure of the first RAN 202 to the new gNB 207.

The UE 201 provides the PCI (physical cell identifier) of the old radio cell in the RRC re-establishment request message to the new gNB 207. The UE 201 also provides its C-RNTI (cell radio network temporary identity). Since in the present scenario the UE context is not locally available, the new gNB 207 then tries to find the old gNB 206 for requesting the UE context. For this, the new gNB 207 checks the NCRT (neighbour cell relation table), which maps PCI to NCI, for PCI and NCI (new radio cell ID) to determine the old gNB 206

If it finds the old gNB 206 in this manner, the new gNB 207 fetches the UE context from old gNB 206. If it does not find the old gNB 206, the new gNB 207 sends a RRC reject message to the UE 201 in response to the RRC connect re-establishment request.

This means that, if the new gNB 207 cannot find the old gNB 206 (i.e. cannot contact the old gNB 206 to obtain the UE context of the connection which has failed), the UE 201 needs to request the establishment of a new RRC connection from the new gNB 207.

Once the UE 201 sends request for the establishment of the new RRC connection, the new gNB 207 communicates with an AMF 101 to establish a new UE context in the new gNB 207.

So, in case of failure (and thus unavailability) of the old gNB (e.g. hardware failure or software failure), the new gNB 207 tries to find the old gNB 206 based on the NCRT/NRT (Neighbour Relation Table) information but, due to the old gNB's unavailability, the new gNB 206 cannot find the old gNB 206 and rejects the UE's request.

Furthermore, it may not be easy for the new gNB 207 to find the old gNB 206 (even if the old gNB 207 has not failed itself). This is because the PCI carries a certain information to identify the old gNB 206 but can have only one of 1008 values in NR (new radio) and is not globally unique and the second RAN 205 may not have NRT information of the first RAN 204.

The NR Cell Identity (NCI) has a total size of 36 bits and is unique. The NR Cell Global Identifier (NCGI) is used to identify NR cells globally. The NR Cell Identity is broadcast within SIB#1 (system information block number 1). However, in NSA (non-standalone) deployments (in EN-DC configuration) a NR base station does not broadcast NCI in the SIB#1 information which results in UE not being able to decode and report the CGI (cell global identity) information.

According to various embodiments, to simplify the RAN failure handling the UE context of a RAN is stored in a centralized function, allowing the service interruption for the UE in case of a RAN failure to be reduced since a RRC re-establishment rather than establishment of a new RRC connection is made possible (even if the old gNB is not available or cannot be identified by the new gNB). For this, functions and/or parameters may be added to the Xn interface with corresponding logic inside the RAN nodes (base stations).

Specifically, according to various embodiments, every time a RAN (e.g. first RAN 202) accepts a UE (i.e. there is UE Initial Access) and/or a PDU Session is established, the RAN 202 creates or updates the RAN's UE context stored in a UE context storage component 208, i.e. a centralized storage function (CSF).

The CSF 208 supports handling a failure of the first RAN 202 by exposing a (e.g. standardized) interface, which is used by the first RAN 202 to update or retire the UE context and may be consulted by the new gNB 207, for example, in case of a failure of the first RAN 202.

The CSF 208 can be part of gNB-CU (centralized unit). In that case, all associated gNB-DUs (distributed units) store the context in the CSF 208. Alternatively, the CSF 208 can be a standalone function. In that case, all gNB-CUs and/or gNB-DUs store the context in the CSF 208.

Table 1 shows exemplary elements of a UE context which may be stored in the CSF 208.

**Table 1**

| **Context type** | **Description** |
|---|---|
| N2 details | NG-AP identifiers, AMF details, etc. |
| DRB details | Information about the active DRBs (identifiers) |
| F1 interface and E1 interface details | UE-associated identifiers of the interfaces |
| Serving node details | Identifier of gNB-CU (gNB-CU-CP and gNB-CU-UP) and gNB-DU |
| PCI | Serving PCI information |
| S-NSSAI(s) | Slice information |
| Security context | Security details e.g., keys for encryption |
| UE identifier | Unique UE identifier GUTI, GUMMEI, etc. |
| Transport layer details | transport layer address parameter e.g., for transport bearer connections |

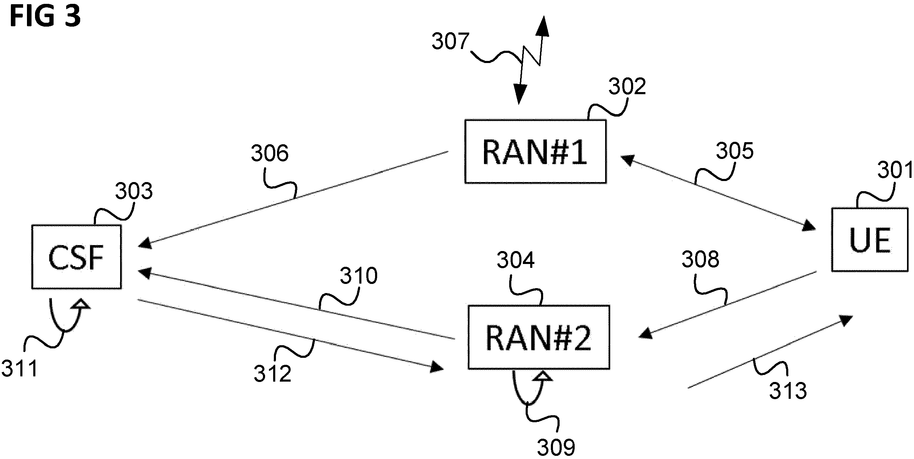

Figure 3 shows a flow diagram 300 for handling a RAN failure according to an embodiment.

A UE 301 corresponding to UE 201, a first RAN 302 corresponding to the first RAN 202, a CSF 303 corresponding to CSF 208 and a second RAN 304 corresponding to the second RAN 205 are involved in the flow.

In 305, the UE establishes an RRC connection with the first RAN 302.

In 306, the first RAN 302 (e.g. the old gNB 206) stores the UE's context in association with an ID of the old gNB and the PCI ID of the cell of the first RAN 302 used by the first UE 301 in the CSF 303.

It is assumed that in 307 there is a failure of the first RAN 302. The failure can be e.g., a hardware failure, a software failure, a radio link failure, a reconfiguration failure, an integrity check failure, etc.

To avoid (long) service interruption the UE 301, in 308, requests RRC re-establishment from the second RAN 304 wherein it indicates the ("old") PCI ID and C-RNTI of its connection to the first RAN 302.

It is assumed that the second RAN 304 is not able to retrieve the UE context from the first RAN 307, e.g. because the old gNB 206 is not available or because the new gNB 207 cannot identify the old gNB (or even the first RAN 207) by PCI ID + C-RNTI.

Therefore, in 310, the second RAN 304 (e.g. specifically the new gNB 207) sends a retrieve UE context request to the CSF 303. In the retrieve UE context request it includes an ID of the new gNB and the "old" PCI ID and C-RNTI provided by the UE 301 in 308. The old PCI ID can be seen as an identification associated with the old gNB.

In 311, the CSF 303 looks for a gNB (i.e. RAN node) which has a neighbour relation (e.g. is adjacent to or has an overlapping or adjacent coverage area with) the new gNB of the second RAN 202 (i.e. of the sender of the request of 310) and which provides a cell associated with the old PCI. Then, the CSF 303 extracts information which is stored under the PCI and which corresponds to the C-RNTI of the gNB found (i.e. the UE context).

In 312, the CSF 303 provides the UE context to the second RAN 304.

The second RAN 304 (specifically the new gNB 307) then, in 313, re-establishes the RRC connection and allocates one or more DRBs (data radio bearers) for the UE 301.

The old gNB and the new gNB may be indicated in 306 and 310, respectively, by means of a global RAN node ID (RAN ID).

For 311, the CSF 303 may use topology information of the first RAN 307 and the second RAN 304 like given in table 2 as an example.

**Table 2**

| **Global RAN node ID** | **Neighbor relation** | |
|---|---|---|
| RAN ID#1 | RAN ID#2 | PCI#1, PCI#2, PCI#3 |
| | RAN ID#3 | PCI#4, PCI#5, PCI#6 |
| | RAN ID#4 | PCI#1, PCI#2, PCI#3 |
| RAN ID#5 | RAN ID#1 | PCI#11, PCI#12, PCI#13 |
| | RAN ID#3 | PCI#4, PCI#5, PCI#6 |
| | RAN ID#7 | PCI#11, PCI#12, PCI#13 |

It should be noted note that it is also possible that the CSF 303 is shared between multiple PLMNs (Public Land Mobile Networks). In the case, the old gNB and the new gNB may includes the PLMN ID (PLMN identifier) during the context storage or retrieval process. Furthermore, CSF can also be deployed in the non-public network (NPN) and can be also be shared between PLMNs and NPNs.

In addition, it is also possible that in the communication network, there can be multiple CSFs 303 can be deployed e.g., in different locations. In this case, these CSFs are interconnected and exchange the stored information. For example, the UE provides the location information that it attached old gNB, which new gNB forwards to the new CSF. The new CSF discoveries the old CSF using this location information and extracts the context. In that case the multiple CSFs can be seen as a communication network component for UE context information which is implemented in a distributed manner (as multiple CSFs) or the request for mobile terminal context information of a RAN component can be seen to be received via another CSF.

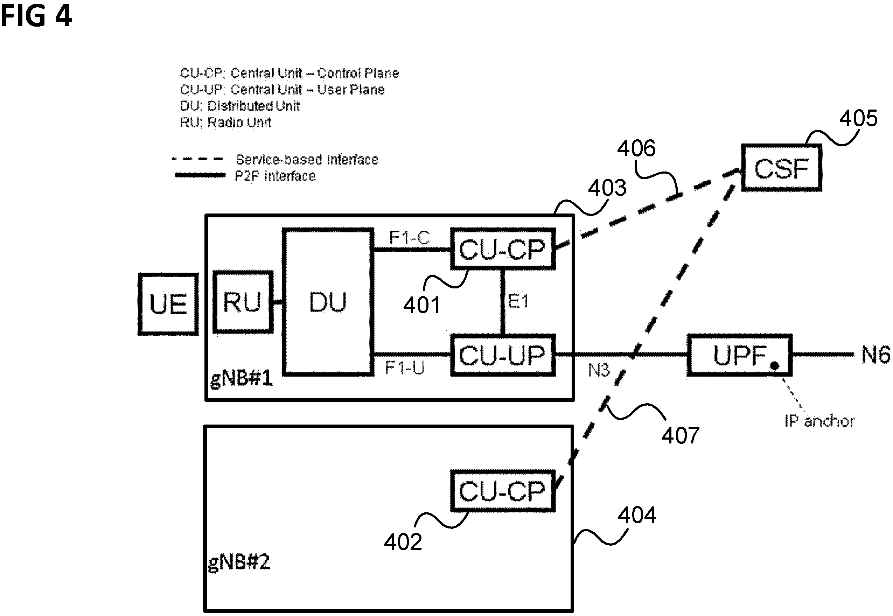

Figure 4 illustrates the usage of a CSF in a C-RAN (Cloud RAN) architecture.

In that case, the CU-CPs 401, 402 of the first gNB 403 and the second gNB 404 may be connected to the CSF 405 via a service-based interface 406, 407.

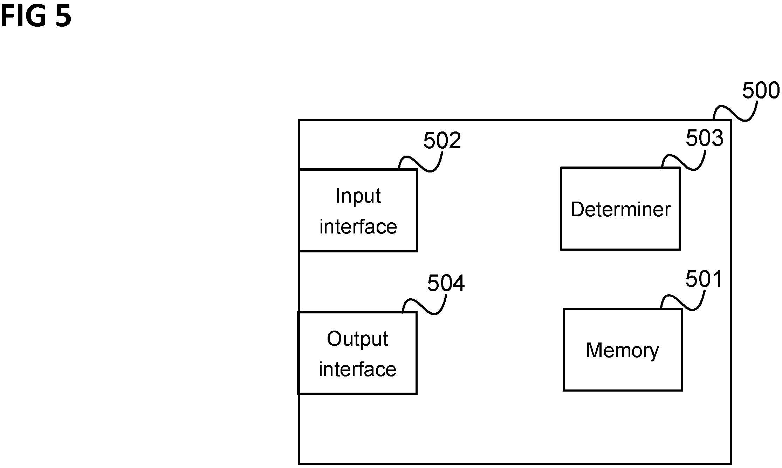

In summary, according to various embodiments, a communication network component is provided as illustrated in figure 5.

Figure 5 shows a communication network component 500 according to an embodiment.

The communication network component 500 (CSF in the above examples) includes a memory 501 configured to store, for each of a plurality base stations, for each of a plurality of connections provided by the base station, mobile terminal context information for the connection.

Further, the communication network component 500 includes an input interface 502 configured to receive, from a radio access network component, a request for mobile terminal context information for a connection previously provided by one of the base stations for a mobile terminal.

The communication network component 500 further includes a determiner 503 configured to determine, among the mobile terminal context information stored, mobile terminal context information for the connection previously provided by the one of the base stations for the mobile terminal and an output interface 504 configured to send the mobile terminal context information for the connection previously provided by the one of the base stations for the mobile terminal to the radio access network component.

According to various embodiments, in other words, a centralized storage function is introduced for mobile terminal (e.g. UE) context to allow handling of the failure of a RAN, i.e. the UE context is maintained in a centralized storage in a communication system.

The approach of figure 5 enables quick recovery of the UE context from a RAN to handle RAN failure scenarios. By managing and maintaing the UE context within the network, impact on the UE is avoided and high reliability can be achieved.

The communication network component (which may also be seen as mobile terminal context information storage component) may be configured (e.g. its input interface) to receive the mobile terminal context information for the connections from the plurality of base stations and to store them upon reception.

The communication network component for example carries out a method as illustrated in figure 6.

Figure 6 shows a flow diagram 600 illustrating a method for re-establishment of a communication connection.

In 601, for each of a plurality base stations, for each of a plurality of connections provided by the base station, mobile terminal context information for the connection is stored.

In 602, a request for mobile terminal context information for a connection previously provided by one of the base stations for a mobile terminal is received from a radio access network component.

In 603 mobile terminal context information for the connection previously provided by the one of the base stations for the mobile terminal is determined among the mobile terminal context information stored.

In 604, the mobile terminal context information for the connection previously provided by the one of the base stations for the mobile terminal is sent to the radio access network component.

The components of the communication network component (e.g. the determiner and the interfaces) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program.

Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network component comprising
A memory configured to store, for each of a plurality base stations, for each of a plurality of connections provided by the base station, mobile terminal context information for the connection;
An input interface configured to receive, from a radio access network component, a request for mobile terminal context information for a connection previously provided by one of the base stations for a mobile terminal;
A determiner configured to determine, among the mobile terminal context information stored, mobile terminal context information for the connection previously provided by the one of the base stations for the mobile terminal; and An output interface configured to send the mobile terminal context information for the connection previously provided by the one of the base stations for the mobile terminal to the radio access network component.

2. The communication network component of claim 1, wherein the base stations are base stations of a first radio access network and the radio access network component is a component of a second radio access network, wherein the first radio access network consists of other base stations than the second radio access network.

3. The communication network component of claim 2, wherein the radio access network component is a base station of the second radio access network.

4. The communication network component of any one of claims 1 to 3, wherein the communication network component is configured to receive, from the radio access network component, an identification associated with the one of the base stations and an identification of a base station which is to re-establish the communication connection and to determine the mobile terminal context information for the connection previously provided by the one of the base stations for the mobile terminal by identifying, among the plurality of base stations, a base station which fits the identification associated with one of the base stations and is in the vicinity of the base station which is to re-establish the communication connection and by determining the mobile terminal context information stored for the identified base station as the mobile terminal context information for the connection previously provided.

5. The communication network component of claims 4, comprising identifying the base station which fits the identification of the one of the base stations and is in the vicinity of the base station which is to re-establish the communication connection by identifying a base station among the plurality of base stations which is closest to the base station which is to re-establish the communication connection among the base stations

6. The communication network component of claim 5, configured to store topology information of a deployment of the plurality of base stations and/or of a radio access network to which the base station which is to re-establish the communication connection belongs and to identify the base station which fits the identification of the one of the base stations and is in the vicinity of the base station which is to re-establish the communication connection using the topology information.

7. The communication network component of any one of claims 1 to 6, wherein the connection is a radio resource control layer connection.

8. The communication network component of any one of claims 1 to 7, wherein the mobile terminal context information includes one or more of a network slice identifier of a network slice providing a communication service via the communication connection;
an identifier of an access and mobility management function handling the communication connection;
an identifier of an access point for communication between the one of the base stations and the access and mobility management function handling the communication connection;
an identifier for each of one or more data radio bearers associated with the communication connection;
an identifier of a centralized unit and a distributed unit of the one of the base stations;
a security context of the communication connection;
an identifier of the mobile terminal; and
transport layer address parameters of the communication connection.

9. The communication network component of any one of claims 1 to 8, wherein the memory is configured to store mobile terminal context information for connections provided by base stations provided by different public land mobile networks, wherein, for each public land mobile network, mobile terminal context information stored for a connection provided by the public land mobile network is stored in association with an identification of the public land mobile network.

10. The communication network component of any one of claims 1 to 9, wherein the input interface is configured to receive the request from the radio access network component via another communication network component for storing mobile terminal context information.

11. A communication network comprising the communication network component of any one of claims 1 to 10 and comprising the radio access network component, wherein the radio access network is configured to receive a request for re-establishment of the communication connection, determine whether it can acquire the mobile terminal context information from the one of the base stations; and, if it cannot acquire the mobile terminal context information from the one of the base stations, send the request for mobile terminal context information to the communication network component.

12. The communication network of claim 11, further comprising the plurality of base stations, wherein each base station is configured to store, for each of a plurality of connections provided by the base station, mobile terminal context information for the connection in the communication network component.

13. The communication network of claim 12, wherein each base station is configured to configure the mobile terminal context information for providing the connection, copy the mobile terminal context information to the communication network component and maintain the mobile terminal context information for providing the connection.

14. A method for re-establishment of a communication connection, comprising:
storing, for each of a plurality base stations, for each of a plurality of connections provided by the base station, mobile terminal context information for the connection;
receiving, from a radio access network component, a request for mobile terminal context information for a connection previously provided by one of the base stations for a mobile terminal;
determining, among the mobile terminal context information stored, mobile terminal context information for the connection previously provided by the one of the base stations for the mobile terminal; and
sending the mobile terminal context information for the connection previously provided by the one of the base stations for the mobile terminal to the radio access network component.

## Amended claims

### Amended claims in accordance with Rule 137(2) EPC.

1. A communication network component (208, 303, 405, 500) comprising
A memory (501) configured to store, for each of a plurality base stations, for each of a plurality of connections provided by the base station, mobile terminal context information for the connection;
An input interface (502) configured to receive, from a radio access network component (207), a request for mobile terminal context information for a connection previously provided by one of the base stations (206) for a mobile terminal;
A determiner (503) configured to determine, among the mobile terminal context information stored, mobile terminal context information for the connection previously provided by the one of the base stations (206) for the mobile terminal; and
An output interface (504) configured to send the mobile terminal context information for the connection previously provided by the one of the base stations (206) for the mobile terminal to the radio access network component (207).

2. The communication network component (208, 303, 405, 500) of claim 1, wherein the base stations are base stations of a first radio access network (202, 302) and the radio access network component (207) is a component of a second radio access network (205, 304), wherein the first radio access network (202, 302) consists of other base stations than the second radio access network (205, 304).

3. The communication network component (208, 303, 405, 500) of claim 2, wherein the radio access network component (207) is a base station of the second radio access network (205, 304).

4. The communication network component (208, 303, 405, 500) of any one of claims 1 to 3, wherein the communication network component (208, 303, 405, 500) is configured to receive, from the radio access network component (207), an identification associated with the one of the base stations (206) and an identification of a base station which is to re-establish the communication connection and to determine the mobile terminal context information for the connection previously provided by the one of the base stations (206) for the mobile terminal by identifying, among the plurality of base stations, a base station which fits the identification associated with one of the base stations (206) and is in the vicinity of the base station which is to re-establish the communication connection and by determining the mobile terminal context information stored for the identified base station as the mobile terminal context information for the connection previously provided.

5. The communication network component (208, 303, 405, 500) of claims 4, comprising identifying the base station which fits the identification of the one of the base stations (206) and is in the vicinity of the base station which is to re-establish the communication connection by identifying a base station among the plurality of base stations which is closest to the base station which is to re-establish the communication connection among the base stations

6. The communication network component (208, 303, 405, 500) of claim 5, configured to store topology information of a deployment of the plurality of base stations and/or of a radio access network to which the base station which is to re-establish the communication connection belongs and to identify the base station which fits the identification of the one of the base stations (206) and is in the vicinity of the base station which is to re-establish the communication connection using the topology information.

7. The communication network component (208, 303, 405, 500) of any one of claims 1 to 6, wherein the connection is a radio resource control layer connection.

8. The communication network component (208, 303, 405, 500) of any one of claims 1 to 7, wherein the mobile terminal context information includes one or more of
a network slice identifier of a network slice providing a communication service via the communication connection;
an identifier of an access and mobility management function handling the communication connection;
an identifier of an access point for communication between the one of the base stations (206) and the access and mobility management function handling the communication connection;
an identifier for each of one or more data radio bearers associated with the communication connection;
an identifier of a centralized unit and a distributed unit of the one of the base stations (206);
a security context of the communication connection;
an identifier of the mobile terminal; and
transport layer address parameters of the communication connection.

9. The communication network component (208, 303, 405, 500) of any one of claims 1 to 8, wherein the memory (501) is configured to store mobile terminal context information for connections provided by base stations provided by different public land mobile networks, wherein, for each public land mobile network, mobile terminal context information stored for a connection provided by the public land mobile network is stored in association with an identification of the public land mobile network.

10. The communication network component (208, 303, 405, 500) of any one of claims 1 to 9, wherein the input interface (502) is configured to receive the request from the radio access network component (207) via another communication network component for storing mobile terminal context information.

11. A communication network comprising the communication network component (208, 303, 405, 500) of any one of claims 1 to 10 and comprising the radio access network component (207), wherein the radio access network is configured to receive a request for re-establishment of the communication connection, determine whether it can acquire the mobile terminal context information from the one of the base stations (206); and, if it cannot acquire the mobile terminal context information from the one of the base stations (206), send the request for mobile terminal context information to the communication network component (208, 303, 405, 500).

12. The communication network of claim 11, further comprising the plurality of base stations, wherein each base station is configured to store, for each of a plurality of connections provided by the base station, mobile terminal context information for the connection in the communication network component (208, 303, 405, 500).

13. The communication network of claim 12, wherein each base station is configured to configure the mobile terminal context information for providing the connection, copy the mobile terminal context information to the communication network component (208, 303, 405, 500) and maintain the mobile terminal context information for providing the connection.

14. A method for re-establishment of a communication connection, the method performed by a communication network component (208, 303, 405, 500) and comprising:
storing, for each of a plurality base stations, for each of a plurality of connections provided by the base station, mobile terminal context information for the connection;
receiving, from a radio access network component (207), a request for mobile terminal context information for a connection previously provided by one of the base stations (206) for a mobile terminal;
determining, among the mobile terminal context information stored, mobile terminal context information for the connection previously provided by the one of the base stations (206) for the mobile terminal; and
sending the mobile terminal context information for the connection previously provided by the one of the base stations (206) for the mobile terminal to the radio access network component (207).
